# EUROPEAN PATENT SPECIFICATION

(11) **EP 2 887 690 B1**
(45) Date of publication and mention of the grant of the patent: **19.07.2017**
(21) Application number: 13306810.6
(22) Date of filing: 20.12.2013
(51) Int. Cl.: H04L 25/05

(54) **A method for dynamically switching bit-rate within an optical switching node**
Verfahren zur dynamischen Umschaltung der Bitrate innerhalb eines optischen Vermittlungsknotens
Procédé de commutation dynamique de débit binaire dans un noeud de commutation optique

(43) Date of publication of application: 24.06.2015
(73) Proprietor: ALCATEL LUCENT, 92100 Boulogne-Billancourt (FR)
(72) Inventor: Dorize, Christian, 91620 NOZAY (FR); Francini, Andrea, MOORESVILLE, NC North Carolina 28115 (US); Walid, Anwar I., MURRAY HILL, NJ New Jersey 07974-0636 (US)
(74) Representative: Berthier, Karine

(56) References cited:
- EP-A1- 2 466 769
- WO-A2-2004/064263
- US-A1- 2004 141 759

## Description

### Field of the invention

The invention relates to the field of optical communication systems.

More particularly, the invention relates to a method for managing data transmission within an optical switching node comprising a bit-rate adaptive optical transponder.

### Background

To respond to the growing needs of increased bit rates in the transmission of information, Wavelength Division Multiplexing (WDM) systems are used. Wavelength Division Multiplexing consists in combining a plurality of signals at different wavelengths in an optical fiber. In order to increase bit rates, sophisticated modulation methods which allow to reach a bit-rate of 100 Gb/s per wavelength and beyond have been developed.

The uncertainty or variability of the traffic demand tends to increase. Therefore, there is an incentive to adjust transmission bit-rates to the actual traffic demand since, on the one hand, lower transmission bit-rates lead to reduction of power consumption and, on the other hand, higher bit-rates affect the optical signal tolerance to degradations such that it is difficult to transmit high bit-rate signals over a long distance with a satisfactory quality. Therefore, there is a need for flexible and adaptive optical networks that dynamically adjust their transmission bit-rates to the varying and unpredicted traffic demand in order to efficiently and cost-effectively transmit data through the optical network.

To address this goal, flexible and adaptive Wavelength Division Multiplexing network elements have been developed. Especially, there are now adaptive bit-rate optical transponders arranged to dynamically adapt theirs transmission bit-rates by tuning their modulation method and/or modulation rate.

However, transition towards a new modulation method or rate requires time to complete so that optical transponders become unavailable during the time of the transition. Thus, data packets received at the client layer cannot be sent to the adaptive bit-rate optical transponder during such a transition without data losses. However, optical connections are required to satisfy tight availability requirement such that bit-rate adjustments are not acceptable if each of them causes data losses.

In order to manage such bit-rate transitions, it is known to switch data packets towards an opaque connection during a bit-rate transition from a first bit-rate to a second bit-rate and switch back data packets towards the adaptive bit-rate optical transponder whenever the transition has been performed. Such a method, disclosed in document FR 2 955 002, involves the utilization of additional network paths and is therefore resource intensive.

### Summary

Various embodiments provide an enhanced method for managing data transmission within an optical switching node comprising an adaptive bit-rate optical transponder that allows dynamically adjusting transmission bit-rate, without data losses or the need for additional network paths.

In a first embodiment, a method for managing data transmission within an optical switching node comprising a client layer receiving data packets and routing the said data packets to an optical layer having an adaptive bit-rate optical transponder converting the data packets received from the client layer into optical signals and being arranged to dynamically adapt its transmission bit-rate is provided. The method comprises:
- receiving at the client layer a bit-rate transition notification containing time information representative of a transition time slot during which an adaptation of the transmission bit-rate of the adaptive bit-rate optical transponder is scheduled;
- storing in a buffer memory of the client layer all data packets received at the client layer and destined for transmission by the adaptive bit-rate optical transponder during the transition time slot in response to receiving the bit-rate transition notification; and
- delivering to the adaptive bit-rate optical transponder the data packets stored in the buffer memory of the client layer during the transition time slot after the said transition time slot has passed.

Thus, thanks to these features, the method for managing data transmission avoids the use of additional network paths.

According to embodiments, such method comprises one or more of the features below:
- the step of storing all data packets received at the client layer and destined for transmission by the adaptive bit-rate optical transponder in the buffer memory of the client layer starts at a discrete time instance t₀-δ, with :
   - t₀: a discrete time instance at which the transition time slot of the adaptive bit-rate of the transponder starts; and
   - δ: a time constant greater or equal to the maximum processing delay between reception of a data packet at the client layer and its conversion into an optical signal by the adaptive bit-rate optical transponder.
- the method comprises:
   - switching on the buffer memory in response to receiving at the client layer a bit-rate transition notification;
   - switching off the buffer memory once the data packets stored in the buffer memory during the transition time slot have been delivered to the adaptive bit-rate optical transponder and the buffer memory has been emptied.
- the data packets stored in the buffer memory of the client layer during the transition time slot are each classified as a function of their protocol into a first FIFO queue for data packets formatted with a responsive protocol and a second FIFO queue for data packets formatted with an unresponsive protocol.
- the data packets stored into the second FIFO queue are delivered to the adaptive bit-rate optical transponder with a higher priority than the data packets stored into the first FIFO queue.
- the method further comprises:
   - determining the traffic demand of data packets to be transmitted through the adaptive bit-rate optical transponder;
   - determining whether a bit-rate transition has to be performed as a function of the determined traffic demand; and
   - sending a bit-rate transition notification to the client layer upon determining that a bit-rate transition has to be performed.
- the client layer comprises a set of optical side ports for providing a communication between the client layer and the optical layer and a buffer memory for each of the optical side ports and the method further comprising managing the buffer memories in order that each buffer memory comprises a free buffer space of a size greater than or equal to T*C bits when the transition time slot of the adaptive bit-rate of the transponder starts; with:
   - T: the duration of the transition time slot; and
   - C: the maximum bit-rate of the adaptive bit-rate transponder.
- the client layer comprises a set of optical side ports for providing a communication between the client layer and the optical layer and a common buffer memory shared among the optical side ports. All data packets received at the client layer and destined for transmission by the adaptive bit-rate optical transponder during the transition time slot are stored in the common buffer memory.

In a second embodiment, a client side line card for an optical switching node comprising an optical layer having an adaptive bit-rate optical transponder is provided. The client side line card is configured to receive data packets and to route the said data packets towards the optical layer and comprises:
- at least one client side port arranged to provide a bi-directional communication of data packets between a network and the client side line card;
- at least one optical side port arranged to provide a bi-directional communication of data packets between the client side line card and the adaptive bit-rate optical transponder; and
- a buffer memory;
- the client side line card being configured to :
- receive a bit-rate transition notification containing time information representative of a transition time slot during which an adaptation of the transmission bit-rate of the adaptive bit-rate optical transponder is scheduled;
- store in the buffer memory all data packets received at the client side line card and destined for transmission by the adaptive bit-rate optical transponder during the transition time slot in response to receiving the bit-rate transition notification; and
- deliver to the adaptive bit-rate optical transponder the data packets stored in the buffer memory of the client side line card during the transition time slot after the said transition time slot has passed.

According to one embodiment, the client side line card comprises a set of optical side ports and a set of buffer memories, each associated with one of the optical side ports, and arranged to store all data packets destined for transmission by the adaptive bit-rate optical transponder during the transition time slot.

According to another embodiment, the client side line card comprises a set of optical side ports and a common buffer memory shared among the optical side ports and arranged to store all data packets received at the client layer and destined for transmission by the adaptive bit-rate optical transponder during the transition time slot.

Aspects of the invention are based on the idea of dynamically switching bit-rate within an optical switching node. Aspects of the invention are based on the idea of simplifying the execution of bit-rate transition. Aspects of the invention are based on the idea of limiting optical connectivity disruption time. Aspects of the invention are based on the idea of reducing power consumption within an optical node.

### Brief description of the drawings

These and other aspects of the invention will be apparent from and elucidated with reference to the embodiments described hereinafter, by way of example, with reference to the drawings.
**Figure 1** illustrates bit rate transitions as a function of the traffic demand.
**Figure 2** is a schematic view of an optical switching node according to a first embodiment.
**Figure 3** is a schematic view of an optical switching node according to a second embodiment.

### Detailed description of the embodiments

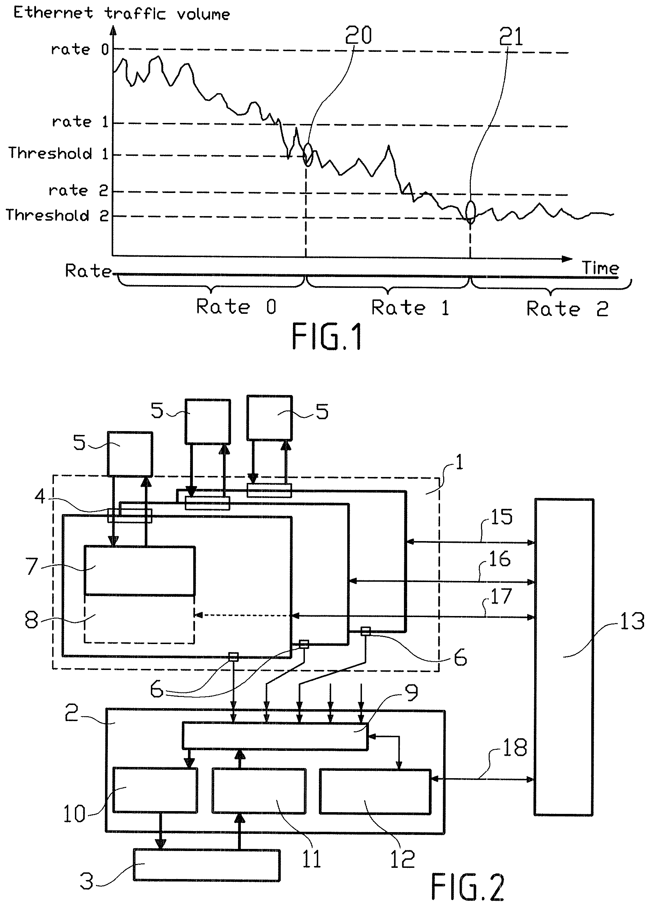

The optical switching node, shown in figure 2, comprises a client layer including at least one client side line card 1 and an optical layer including at least one adaptive bit-rate optical transponder 2 and an all-optical switching layer also called Reconfigurable Optical Add and Drop multiplexer 3 (ROADM). One client line card 1 is shown on Figure 1 for the sake of illustration. One optical transponder 2 is shown for the sake of simplicity. A higher number of client side line cards 1 and/or optical transponder 2 may be arranged similarly to increase the add-capacity of the node.

The client side line card 1 comprises a set of client side ports 4 that each provides bi-directional communication between a TCIP/IP network 5 and the client-side line card 1. The client side line card 1 also comprises a set of optical side ports 6 which each provide an optical bi-directional communication between the client side line card 1 and the adaptive bit-rate transponder 2. The client side line card 1 is for example an IP router line card or an Ethernet switch. The client side line card 1 is arranged to receive data packets from the TCIP/IP networks and to route them towards the adaptive bit-rate transponder 2 and conversely. A control plane provides information for routing the received signal towards the requested destination.

The client side line card 1 receives electrical signals from the TCP/IP networks and converts them into black and white optical signals routed through the optical side ports 6 towards the adaptive bit rate transponder 2.

The client side line card 1 comprises packet buffer memories 7, 8 allocated for each of the optical side ports 6.

A first part of the buffer capacity, called steady state buffer memory 7, is allocated to data packets storage for data packets received at the client layer during steady state in which no bit-rate transition of the adaptive bit-rate optical transponder 2 is being performed. The steady state buffer memory 7 stores data packets awaiting transmission over the optical layer and/or stores data packet received from the optical layer and awaiting transmission over a TCP/IP network 5. According to an embodiment, the steady state buffer memory 7 is managed by an active queue management scheme like Periodic Early Detection (PED). Such an active queue management scheme is disclosed in the patent US 8441927 or in "Periodic Early Detection for Improved TCP Performance and Energy Efficiency," A. Francini, Computer Networks, Volume 56, Issue 13, September 2012. Such an active queue management scheme allows keeping the queue occupancy within a predefined range for extended periods.

A second part of the buffer capacity, called additional buffer memory for bit-rate transition 8, is allocated to store all data packets received at the client side ports 4 and destined for transmission by the adaptive bit-rate optical transponder 2 whenever a bit-rate transition of the said optical transponder 2 is being performed.

Besides, the adaptive bit-rate transponder 2 comprises O/E converters, not shown, and an aggregation and disaggregation module 9. The aggregation and disaggregation module 9 is arranged to combine multiple signals coming from the client-side line card 1 and corresponding to the same destination node into a signal to be transmitted through the optical layer. Conversely, the aggregation and disaggregation module is arranged to disaggregate a signal coming from the optical network into multiple signals which are each destined for a respective TCP/IP network 5 via a corresponding client side line card 1.

The adaptive bit rate transponder 2 also comprises one or several optical transmitters 11 which each correspond to a wavelength channel, i.e. part of the operating wavelength spectrum. The optical transmitter 11 comprises a laser diode and is arranged to generate an optical signal modulated by the signal which has been aggregated by the aggregation and disaggregation module 9. The optical signal is then multiplexed into the Reconfigurable Optical Add and Drop multiplexer 3 (ROADM) before being transmitted to a Wavelength Division Multiplexing transmission line. To control the wavelength of each optical signal transmitted through the Wavelength Division Multiplexing transmission line, the laser diode of the optical transmitter may have a tunable wavelength.

Reversely, the adaptive bit-rate transponder 2 comprises an optical receiver 11 which uses a coherent receiving technique in order to receive optical signals from the Reconfigurable Optical Add and Drop multiplexer 3.

Reconfigurable Optical Add and Drop multiplexer 3 provides add and drop functions, i.e. a capability to make write-accesses and read-accesses to the WDM transport layer. Some designs and implementations of such Reconfigurable Optical Add and Drop multiplexers 3 are disclosed in "Flexible Architectures for Optical Transport nodes and Networks", S. Gringeri et al., IEEE Communications Magazine, July 2010, pp40-50.

The adaptive bit-rate transponder 2 comprises a bit rate management module 12 which is controlled by a bit rate transition control plane module 13 and which is arranged to control bit-rate transitions of the adaptive bit-rate optical transponder 2. Bit rate is scaled by tuning one or several of the following parameters of the modulation method carried out by the adaptive bit-rate transponder 2: the modulation format, the symbol rate and the channel coding scheme for forward error correction.

Furthermore, the optical switching node comprises a bit rate transition control plane module 13 which is in charge of managing bit-rate transitions. The bit rate transition control plane module 13 is arranged to determine the traffic demand of data packets received at the client layer to be transmitted through the adaptive bit-rate optical transponder 1 to the WDM transmission line of the optical layer. Furthermore, the bit rate transition control plane module 13 is capable of determining whether a bit-rate transition of an adaptive bit-rate optical transponder 2 has to be performed as a function of the determined traffic demand and to send bit-rate transition notification to the client side line card 1 and to the bit rate management module 12 of the transponder 2. To that end, in the illustrated embodiment, the bit rate transition control plane module 13 is linked to each of the optical side ports 6 of the client side line card 1 and to the bit-rate management module 12 of the transponder 12 through control channels 15, 16, 17, 18. The bit-rate transition control plane module 13 may be implemented as an independent unit. In alternative embodiments, the bit-rate control plane module 13 is implemented in the client side line card 1 or in the adaptive bit rate optical transponder 2. In such embodiments, bit-rate transition notification may be exchanged trough transport frame.

A bit-rate transition from a higher bit rate to a lower bit rate has to be performed whenever the traffic demand falls below a threshold corresponding to a traffic demand below the lower bit-rate. As shown in Figure 1, a transition 20 from rate 0 to rate 1 is performed once the traffic demand falls below a threshold 1, lower than rate 1. Furthermore, a transition 21 from rate 1 to rate 2 is performed once the traffic demand falls below threshold 2. Conversely, a bit rate transition from a lower bit rate to a higher bit-rate has to be performed whenever the traffic demand rises above a threshold corresponding to a traffic demand below the lower bit rate. Advantageously, in order to avoid unwanted rapid transition between bit-rates, it is possible to use hysteresis in order to distinguish the thresholds for triggering decreasing bit-rate transitions from the thresholds for triggering increasing bit-rate transitions.

Whenever the bit rate transition control plane module 13 has determined that a bit-rate transition has to be performed in respect of an optical transponder 2, it sends a bit-rate transition notification to the client side line cards 1 connected to the corresponding optical transponder 2 and to the adaptive bit rate optical transponder 2. The bit-rate transition notification indicates that an adaptation of the transmission bit-rate is scheduled and contains information representative of a transition time slot.

According to an embodiment, the duration T of the transition time slot is predetermined. Thus, the bit-rate transition notification sent by the bit-rate transition control plane module 13 contains information regarding a discrete time instance t₀ at which the transition time slot will start and the duration T of the transition time slot or the discrete time instance t₀+T at which the transition time slot will pass.

According to another embodiment, the bit rate transition control plane module 13 sends to the client line side card 1 and to the bit rate management module 12 of the transponder 1 a first notification indicating a discrete time instance t₀ at which the transition time slot will start. Then, once the bit-rate transition control plane module 13 has been informed by the bit rate management module 12 of the transponder 1 that the bit-rate transition has been successfully performed, it sends a second notification to the client side line card 1 indicating that the transition time slot has passed.

During the transition time slot, all data packets received at the client-side line card 1 and destined for transmission by the adaptive bit-rate optical transponder 2 affected by the bit-rate transition are stored in the additional buffer memories for bit-rate transition 8. Once the transition time slot has passed, data packets stored in the additional buffer memories 8 are delivered to the adaptive bit-rate optical transponder 2.

According to an embodiment, the storage process of data packets is preponed in order to take into account processing delays that a data packet may experience, due to format adaptation functions like packet aggregation by the aggregation and disaggregation module 9, between its reception at the client side line card 1 and its conversion into an optical signal by the transponder 2. In other words, the step of storing all data packets in the buffer memories for bit-rate transition 8 starts at a discrete time instance t₀ - δ, with δ being a time constant equal or greater than a maximum processing delay between reception of a data packet at the client layer and its conversion into an optical signal by the adaptive bit-rate optical transponder 2.

To ensure that no data packet is lost during bit-rate transitions, the size of each additional buffer memory for bit-rate transition 8 of the client side line card 1 is at least T*C bits with T being the duration of the bit-rate transition and C being the maximum bit-rate of the adaptive bit-rate transponder 2 affected by the bit-rate transition. Thus, in order to guarantee that a free buffer space of T*C bits is available when the bit-rate transition starts, the whole buffer memory 7, 8 associated with each optical side port 6 is managed such that the stored data packets, received during steady state, do not occupy a buffer space B₀ larger than Bₘₐₓ - T*C with Bₘₐₓ being the total size of the whole buffer memory 7, 8 associated with each optical side port 6. Such a result can especially be obtained through a suitable active queue management scheme such as Periodic Early Detection (PED) as previously disclosed.

Furthermore, according to an embodiment, since an additional buffer memory for bit-rate transition 8 having a size of T*C bits is only used during bit-rate transitions, the size of the whole buffer memories 7, 8 is dynamically adjusted in order to reduce power consumption. For that purpose, the additional buffer memories for bit-rate transition 8 can be allocated in one or more separate memory devices. In this context, the additional buffer memory 8 is switched on in response to receiving a bit-rate transition notification at the client side line card 1 and is switched off once the additional buffer memory 8 has been emptied. Since data packets received at the client-side line card 1 immediately after the bit-rate transition are also stored in the additional buffer memory 8, the additional buffer memory 8 is empty when the data packets stored during the transition time slot have been delivered to the adaptive bit-rate optical transponder 2 and the rate of data packets delivered to the adaptive bit-rate optical transponder 2 has been higher than the rate of arrival of data packets at the client-side line card 1 for a period of time sufficient for emptying the additional buffer memory 8.

The additional buffer memories for bit-rate transition 8 only need to be switched on with sufficient advance to be ready for storing data packets at the discrete time instance t₀ or to - δ.

Thus, the buffer memory space B_{A} which is available for storing data packets in the buffer memories 7, 8 is managed as follows:
- At a discrete time instance t₀ or to - δ, the available buffer memory space B_{A} increases from B₀ to Bₘₐₓ.
- At a discrete time t₀ + T, once the bit-rate transition has been performed, data packets stored in the additional buffer memories 8 are delivered to the adaptive bit-rate optical transponder and the available buffer memory space starts dropping from Bₘₐₓ, until it reaches its steady-state value B₀ at a discrete time instance t₀+T+ϑ, with ϑ being the buffer occupancy convergence time.

The function that regulates delivering of data packets stored in the buffer memory during the transition time slot to the adaptive bit-rate transponder 1 and, therefore, the function that regulates the decay of B_{A} between t₀ + T and t₀+T+ϑ may be linear in time, but may also have a different profile.

The buffer occupancy convergence time ϑ may be constant or dynamically adjusted based on the flow of data packets received at the client side line card 1 and destined for transmission by the adaptive bit-rate transponder 2 affected by the bit-rate transition once the transition time slot has passed.

The performance of the method for dynamically switching bit-rate depends on the length of the convergence time ϑ and on the maximum packet delay, due to bit rate transition, associated with data packets stored in the additional buffer memory 8 for bit-rate transition. In order to optimize these parameters, data packets stored in the buffer memory 8 during the transition time slot are each classified as a function of the protocol. Data packets formatted with a responsive protocol such as TCP (Transmission Control Protocol) are allocated to a first FIFO queue and data packets formatted with a real-time, unresponsive protocol, such as UDP (User Datagram Protocol) are allocated to a second FIFO queue. The transmission of data packets out of the second FIFO queue is scheduled with a strictly higher priority over the transmission of data packets out of the first FIFO queue. This arrangement avoids the loss of data packets formatted with a real-time, unresponsive protocol and improves the effectiveness of the active queue management scheme like Periodic Early Detection that controls the length of the first FIFO queue in decaying the size of the first FIFO queue after the bit-rate transition is completed.

In the embodiment shown in Figure 2, the client-side line card 1 comprises one additional buffer memory 8 for each of the optical side ports 6. Since each optical side port may have to support a bit-rate up to C when mapped one-to-one onto an adaptive bit-rate optical transponder, the size of each additional buffer memory 8 must be T*C. If the number of optical side ports is P, the combined size of the additional buffer memories 8 is P*T*C bits.

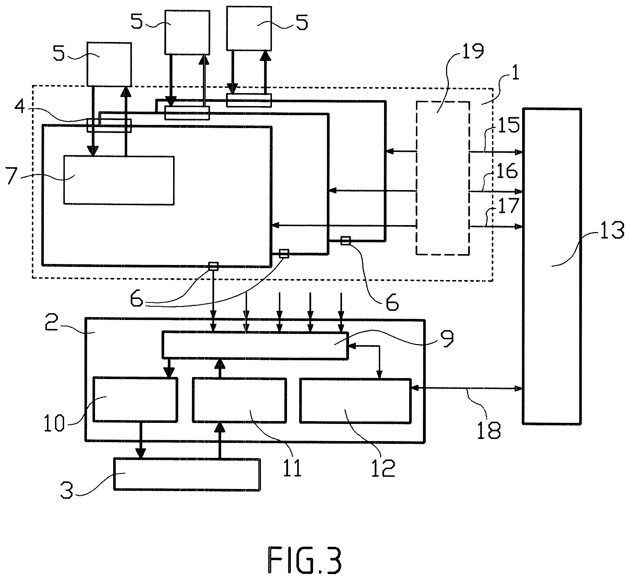

According to another embodiment of the invention, shown in Figure 3, the client-side line card 1 comprises one single buffer memory for bit-rate transition 19 which is shared among all the optical side ports 6 of the client-side line card 1. Such an embodiment allows reducing the overall amount of buffering memory space required to manage a bit-rate transition. As a matter of fact, assuming that the sum of the capacities of the optical side ports that can be mapped onto one adaptive bit-rate optical transponder is never larger than C, the size of the shared buffer memory for bit-rate transition 13 is T*C bits while the whole size of all the additional buffer memories for bit-rate transition 8 of the embodiment of figure 2 is P*T*C bits.

According to an embodiment, a client side line card 1 is connected to a set of adaptive bit-rate optical transponders 2. The bit-rate transition control plane module 13 guarantees that only one bit rate transition is performed at the same time within the set of transponders 2. Therefore, in case the bit rate transition control plane module 13 has determined that a bit-rate transition of an adaptive bit-rate optical transponder 2 has to be performed for a transponder while a bit-rate transition of another transponder 2 is being performed, the new bit-rate transition is delayed until the ongoing one is completed, to ensure that the common buffer memory 19 for bit-rate transitions is used for a single bit rate transition at the same time. The common buffer memory for bit-rate transition 19 is also switched off between two successive bit-rate transitions.

In an embodiment, an intermediate electrical switch may be employed between the optical side ports 6 of the client layer and the optical transponders 2.

The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. The term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. Method for managing data transmission within an optical switching node comprising a client layer receiving data packets and routing the said data packets to an optical layer having an adaptive bit-rate optical transponder (2) converting the data packets received from the client layer into optical signals and carrying out a modulation method, the said adaptive bit-rate optical transponder (2) being arranged to dynamically adapt its transmission bit-rate by tuning one or several parameters of the modulation method chosen among a modulation format, a symbol rate and a channel coding scheme for forward error correction, the method comprising:
- receiving at the client layer a bit-rate transition notification containing time information representative of a transition time slot during which an adaptation of the transmission bit-rate of the adaptive bit-rate optical transponder (2) is scheduled;
- storing in a buffer memory (8, 19) of the client layer all data packets received at the client layer and destined for transmission by the adaptive bit-rate optical transponder (2) during the transition time slot in response to receiving the bit-rate transition notification; and
- delivering to the adaptive bit-rate optical transponder (2) the data packets stored in the buffer memory (8, 19) of the client layer during the transition time slot after the said transition time slot has passed.

2. Method according to claim 1, wherein the step of storing all data packets received at the client layer and destined for transmission by the adaptive bit-rate optical transponder (2) in the buffer memory (8, 19) of the client layer starts at a discrete time instance t₀ - δ, with:
- t₀: a discrete time instance at which the transition time slot of the adaptive bit-rate of the transponder starts; and
- δ: a time constant greater or equal to the maximum processing delay between reception of a data packet at the client layer and its conversion into an optical signal by the adaptive bit-rate optical transponder (2).

3. Method according to any one of claim 1 or 2, comprising :
- switching on the buffer memory (8, 19) in response to receiving at the client layer a bit-rate transition notification ;
- switching off the buffer memory (8, 19) once the data packets stored in the buffer memory (8, 19) during the transition time slot have been delivered to the adaptive bit-rate optical transponder (2) and the buffer memory (8, 19) has been emptied.

4. Method according to any one of claims 1 to 3, wherein the data packets stored in the buffer memory (8, 19) of the client layer during the transition time slot are each classified as a function of their protocol into a first FIFO queue for data packets formatted with a responsive protocol and a second FIFO queue for data packets formatted with an unresponsive protocol.

5. Method according to claim 4, wherein the data packets stored into the second FIFO queue are delivered to the adaptive bit-rate optical transponder with a higher priority than the data packets stored into the first FIFO queue.

6. Method according to any one of claims 1 to 5, further comprising :
- determining the traffic demand of data packets to be transmitted through the adaptive bit-rate optical transponder (2) ;
- determining whether a bit-rate transition has to be performed as a function of the determined traffic demand; and
- sending a bit-rate transition notification to the client layer upon determining that a bit-rate transition has to be performed.

7. Method according to any one of claims 1 to 6, wherein the client layer comprises a set of optical side ports (6) for providing a communication between the client layer and the optical layer and a buffer memory (8) for each of the optical side ports and wherein the method further comprises managing the buffer memories (8) in order that each buffer memory comprises a free buffer space of a size greater than or equal to T*C bits when the transition time slot of the adaptive bit-rate of the transponder starts; with:
- T: the duration of the transition time slot; and
- C: the maximum bit-rate of the adaptive bit-rate transponder (2).

8. Method according to any one of claims 1 to 6, wherein the client layer comprises a set of optical side ports (6) for providing a communication between the client layer and the optical layer and a common buffer memory (19) shared among the optical side ports (6) and wherein all data packets received at the client layer and destined for transmission by the adaptive bit-rate optical transponder (2) during the transition time slot are stored in the common buffer memory (19).

9. Client side line card (1) for an optical switching node comprising an optical layer having an adaptive bit-rate optical transponder (2) converting the data packets received from the client layer into optical signals and carrying out a modulation method, the said adaptive bit-rate optical transponder (2) being arranged to dynamically adapt its transmission bit-rate by tuning one or several parameters of the modulation method chosen among a modulation format, a symbol rate and a channel coding scheme for forward error correction, the client side line card (1) being configured to receive data packets and to route the said data packets towards the optical layer, the client side line card comprising:
- at least one client side port (4) arranged to provide a bi-directional communication of data packets between a network (5) and the client side line card (1);
- at least one optical side port (6) arranged to provide a bi-directional communication of data packets between the client side line card (1) and the adaptive bit-rate optical transponder (2) ; and
- a buffer memory (8, 19);
- the client side line card being configured to:
- receive a bit-rate transition notification containing time information representative of a transition time slot during which an adaptation of the transmission bit-rate of the adaptive bit-rate optical transponder (2) is scheduled;
- store in the buffer memory (8, 19) all data packets received at the client side line card (1) and destined for transmission by the adaptive bit-rate optical transponder (2) during the transition time slot in response to receiving the bit-rate transition notification; and
- deliver to the adaptive bit-rate optical transponder (2) the data packets stored in the buffer memory (8, 19) of the client side line card (1) during the transition time slot after the said transition time slot has passed.

10. Client side line card (1) according to claim 9, comprising a set of optical side ports (6) and a set of buffer memories (8), each associated with one of the optical side ports, and arranged to store all data packets destined for transmission by the adaptive bit-rate optical transponder (2) during the transition time slot.

11. Client side line card (1) according to claim 9, comprising a set of optical side ports (6) and a common buffer memory (19) shared among the optical side ports (6) and arranged to store all data packets received at the client layer and destined for transmission by the adaptive bit-rate optical transponder (2) during the transition time slot.

12. Optical switching node comprising a client side line card according to any one of claims 9 to 11, at least one adaptive bit-rate optical transponder (2) and a bit-rate transition control plane module (13) arranged to determine whether a bit-rate transition has to be performed as a function of a determined traffic demand and send a bit-rate transition notification to the client side line card (1) and to the adaptive bit-rate optical transponder (2) upon determining that a bit-rate transition has to be performed.

## Patentansprüche

1. Verfahren zum Verwalten der Datenübertragung innerhalb eines optischen Vermittlungsknotens, umfassend eine Client-Schicht, die Datenpakete empfängt und besagte Datenpakete zu einer optischen Schicht leitet, die einen optischen Transponder der adaptiven Bitrate (2) aufweist, zur Umwandlung der von der Client-Schicht empfangenen Datenpakete in optische Signale und zur Durchführung eines Modulationsverfahrens, wobei besagter optischer Transponder der adaptiven Bitrate (2) ausgelegt ist, um seine Übertragungs-Bitrate dynamisch anzupassen durch Abstimmen eines oder verschiedener Parameter des Modulationsverfahrens, die ausgewählt werden aus einem Modulationsformat, einer Symbolrate und einem Kanalcodierungsschema für die Vorwärtsfehlerkorrektur, wobei das Verfahren umfasst:
- Empfangen an der Client-Schicht einer Mitteilung über die Bitraten-Umstellung, die Zeitinformationen enthält, die repräsentativ sind für einen Umstellungszeitschlitz, während dem eine Anpassung der Übertragungs-Bitrate des optischen Transponders der adaptiven Bitrate (2) geplant ist;
- Speichern in einem Pufferspeicher (8, 19) der Client-Schicht aller Datenpakete, die an der Client-Schicht empfangen worden sind und bestimmt sind für die Übertragung mittels des optischen Transponders der adaptiven Bitrate (2) während des Umstellungszeitschlitzes als Antwort auf den Empfang der Mitteilung über die Bitraten-Umstellung; und
- Zustellung am optischen Transponder der adaptiven Bitrate (2) der im Pufferspeicher (8, 19) der Client-Schicht während des Umstellungszeitschlitzes gespeicherten Datenpakete, nachdem besagter Umstellungszeitschlitz überschritten worden ist.

2. Verfahren nach Anspruch 1, wobei der Schritt zur Speicherung aller an der Client-Schicht erhaltenen und für die Übertragung mittels des optischen Transponders der adaptiven Bitrate (2) bestimmten Datenpakete im Pufferspeicher (8, 19) der Client-Schicht zu einem diskreten Zeitpunkt t₀-δ startet, mit:
- to: ein diskreter Zeitpunkt, an dem der Umstellungszeitschlitz der adaptiven Bitrate des Transponders startet; und
- δ: eine Zeitkonstante, die größer oder gleich der maximalen Verarbeitungsverzögerung zwischen dem Empfang eines Datenpakets an der Client-Schicht und seiner Umwandlung in ein optisches Signal durch den optischen Transponder der adaptiven Bitrate (2) ist.

3. Verfahren nach einem beliebigen der Ansprüche 1 oder 2, umfassend:
- Einschalten des Pufferspeichers (8, 19) als Antwort auf dem Empfang an der Client-Schicht einer Mitteilung über die Bitraten-Umstellung;
- Abschalten des Pufferspeichers (8, 19), sobald die während des Umstellungszeitschlitzes im Pufferspeicher (8, 19) gespeicherten Datenpakete dem optischen Transponder der adaptiven Bitrate (2) zugestellt worden sind und der Pufferspeicher (8, 19) geleert worden ist.

4. Verfahren nach einem beliebigen der Ansprüche 1 bis 3, wobei jedes der im Pufferspeicher (8, 19) der Client-Schicht während des Umstellungszeitschlitzes gespeicherten Datenpakete als Funktion seines Protokolls in einer ersten FIFO-Warteschlange klassifiziert wird für Datenpakete, die mit einem Ansprechprotokoll formatiert sind, und in einer zweiten FIFO-Warteschlange für Datenpakete, die mit einem Nicht-Ansprechprotokoll formatiert sind.

5. Verfahren nach Anspruch 4, wobei die in der zweiten FIFO-Warteschlange gespeicherten Datenpakete dem optischen Transponder der adaptiven Bitrate mit höherer Priorität zugestellt werden als die Datenpakete, die in der ersten FIFO-Warteschlange gespeichert werden.

6. Verfahren nach einem beliebigen der Ansprüche 1 bis 5, weiterhin umfassend:
- Bestimmen der Verkehrsnachfrage an Datenpaketen, die durch den optischen Transponder der adaptiven Bitrate (2) übertragen werden müssen;
- Bestimmen, ob eine Bitraten-Umstellung als Funktion der bestimmten Verkehrsnachfrage durchgeführt werden muss; und
- Senden einer Mitteilung über die Bitraten-Umstellung an die Client-Schicht nach Bestimmen, dass eine Bitraten-Umstellung durchgeführt werden muss.

7. Verfahren nach einem beliebigen der Ansprüche 1 bis 6, wobei die Client-Schicht einen Satz von optischen Seitenanschlüssen (6) umfasst zum Bereitstellen einer Kommunikation zwischen der Client-Schicht und einem Pufferspeicher (8) für jeden der optischen Seitenanschlüsse und wobei das Verfahren weiterhin umfasst die Verwaltung der Pufferspeicher (8), damit jeder Pufferspeicher einen freien Speicherplatz umfasst, dessen Größe größer oder gleich T*C Bits ist, wenn der Umstellungszeitschlitz des optischen Transponder der adaptiven Bitrate startet; mit:
- T: Dauer des Umstellungszeitschlitzes; und
- C: Maximale Bitrate des Transponders der adaptiven Bitrate (2).

8. Verfahren nach einem beliebigen der Ansprüche 1 bis 6, wobei die Client-Schicht einen Satz von optischen Seitenanschlüssen (6) umfasst zum Bereitstellen einer Kommunikation zwischen der Client-Schicht und der optischen Schicht und einem gemeinsamen Pufferspeicher (19), der von allen optischen Seitenanschlüssen (6) geteilt wird und wobei alle Datenpakete, die an der Client-Schicht empfangen worden sind für die Übertragung mittels des optischen Transponders der adaptiven Bitrate (2) während des Umstellungszeitschlitzes im gemeinsamen Pufferspeicher (19) gespeichert werden.

9. Client-Seitenleitungskarte (1) für einen optischen Vermittlungsknoten, umfassend eine optische Schicht, die einen optischen Transponder der adaptiven Bitrate (2) aufweist, zur Umwandlung der von der Client-Schicht empfangenen Datenpakete in optische Signale und zur Durchführung eines Modulationsverfahrens, wobei besagter optischer Transponder der adaptiven Bitrate (2) ausgelegt ist, um seine Übertragungs-Bitrate dynamisch anzupassen durch Abstimmen eines oder verschiedener Parameter des Modulationsverfahrens, die ausgewählt werden aus einem Modulationsformat, einer Symbolrate und einem Kanalcodierungsschema für die Vorwärtsfehlerkorrektur, wobei die Client-Seitenleitungskarte (1) konfiguriert ist, um Datenpakete zu empfangen und besagte Datenpakete zur optischen Schicht zu leiten, wobei die Client-Seitenleitungskarte umfasst:
- mindestens einen Client-Seitenanschluss (4), der ausgelegt ist zum Bereitstellen einer bidirektionalen Kommunikation von Datenpaketen zwischen einem Netzwerk (5) und der Client-Seitenleitungskarte (1);
- mindestens einen optischen Seitenanschluss (6), der ausgelegt ist zum Bereitstellen einer bidirektionalen Kommunikation von Datenpaketen zwischen der Client-Seitenleitungskarte (1) und dem optischen Transponder der adaptiven Bitrate (2); und
- einen Pufferspeicher (8, 19);
- die Seitenleitungskarte ist konfiguriert für:
- Empfangen einer Mitteilung über die Bitraten-Umstellung, die Zeitinformationen enthält, die repräsentativ sind für einen Umstellungszeitschlitz, während dem eine Anpassung der Übertragungs-Bitrate des optischen Transponders der adaptiven Bitrate (2) geplant ist;
- Speichern im Pufferspeicher (8, 19) aller Datenpakete, die an der Client-Seitenleitungskarte (1) empfangen worden sind und bestimmt sind für die Übertragung mittels des optischen Transponders der adaptiven Bitrate (2) während des Umstellungszeitschlitzes als Antwort auf den Empfang der Mitteilung über die Bitraten-Umstellung; und
- Zustellung am optischen Transponder der adaptiven Bitrate (2) der im Pufferspeicher (8, 19) der Client-Seitenleitungskarte (1) während des Umstellungszeitschlitzes gespeicherten Datenpakete, nachdem besagter Umstellungszeitschlitz überschritten worden ist.

10. Client-Seitenleitungskarte (1) nach Anspruch 9, umfassend einen Satz von optischen Seitenanschlüssen (6) und einen Satz von Pufferspeichern (8), jeder verbunden mit einem der optischen Seitenanschlüsse und ausgelegt zum Speichern aller Datenpakete, die bestimmt sind für die Übertragung mittels des optischen Transponders der adaptiven Bitrate (2) während des Umstellungszeitschlitzes.

11. Client-Seitenleitungskarte (1) nach Anspruch 9, umfassend einen Satz von optischen Seitenanschlüssen (6) und einen gemeinsamen Pufferspeicher (19), der von den optischen Seitenanschlüssen (6) geteilt wird und ausgelegt ist zum Speichern aller Datenpakete, die an der Client-Schicht empfangen worden sind und bestimmt sind für die Übertragung mittels des optischen Transponders der adaptiven Bitrate (2) während des Umstellungszeitschlitzes.

12. Optischer Vermittlungsknoten, umfassend eine Client-Seitenleitungskarte nach einem beliebigen der Ansprüche 9 bis 11, wobei mindestens ein optischer Transponder der adaptiven Bitrate (2) und ein Steuerebenen-Modul der Bitraten-Umstellung (13) ausgelegt sind zum Bestimmen, ob eine Bitraten-Umstellung durchgeführt werden muss als Funktion einer bestimmten Verkehrsnachfrage und Senden einer Mitteilung über die Bitraten-Umstellung an die Client-Seitenleitungskarte (1) und an den optischen Transponder der adaptiven Bitrate (2) nach Bestimmen, dass eine Bitraten-Umstellung durchgeführt werden muss.

## Revendications

1. Procédé de gestion d'une transmission de données dans un noeud de commutation optique comprenant une couche cliente qui reçoit des paquets de données et achemine lesdits paquets de données vers une couche optique dotée d'un transpondeur optique à débit binaire adaptatif (2), qui convertit les paquets de données reçus en provenance de la couche cliente en signaux optiques et exécute un procédé de modulation, ledit récepteur optique à débit binaire adaptatif (2) étant conçu pour adapter dynamiquement son débit binaire de transmission en réglant un ou plusieurs paramètres du procédé de modulation choisis parmi un format de modulation, un débit de symboles et un schéma de codage de canal pour la correction d'erreurs sans voie de retour, le procédé comprenant les étapes suivantes :
- recevoir au niveau de la couche cliente une notification de transition de débit binaire contenant des informations temporelles qui représentent un intervalle de temps de transition durant lequel une adaptation du débit binaire de transmission du transpondeur optique à débit binaire adaptatif (2) est planifiée ;
- stocker dans une mémoire tampon (8, 19) de la couche cliente tous les paquets de données reçus au niveau de la couche cliente et destinés à être transmis par le transpondeur optique à débit binaire adaptatif (2) durant l'intervalle de temps de transition en réponse à la réception de la notification de transition de débit binaire ; et
- transmettre au transpondeur optique à débit binaire adaptatif (2) les paquets de donnés stockés dans la mémoire tampon (8, 19) de la couche cliente durant l'intervalle de temps de transition après que ledit intervalle de temps de transition s'est écoulé.

2. Procédé selon la revendication 1, dans lequel l'étape de stockage de tous les paquets de données reçus au niveau de la couche cliente et destinés à être transmis par le transpondeur optique à débit binaire adaptatif (2) dans la mémoire tampon (8, 19) de la couche cliente débute à une instance de temps discrète t₀-δ, avec :
- to : une instance de temps discrète à laquelle débute l'intervalle de temps de transition du débit binaire adaptatif du transpondeur ; et
- δ : une constante de temps supérieure ou égale au délai de traitement maximal entre la réception d'un paquet de données au niveau de la couche cliente et sa conversion en signal optique par le transpondeur optique à débit adaptatif (2).

3. Procédé selon l'une quelconque des revendications 1 ou 2, comprenant les étapes suivantes :
- activer la mémoire tampon (8, 19) en réponse à la réception au niveau de la couche cliente d'une notification de transition de débit binaire ;
- désactiver la mémoire tampon (8, 19) une fois que les paquets de données stockés dans la mémoire tampon (8, 19) durant l'intervalle de temps de transition ont été transmis au transpondeur optique à débit binaire adaptatif (2) et que la mémoire tampon (8, 19) a été vidée.

4. Procédé selon l'une quelconque des revendications 1 à 3, dans lequel les paquets de données stockés dans la mémoire tampon (8, 19) de la couche cliente durant l'intervalle de temps de transition sont tous classés en fonction de leur protocole dans une première file d'attente FIFO pour les paquets de données formatés avec un protocole avec réaction et une deuxième file d'attente FIFO pour les paquets de données formatés avec un protocole sans réaction.

5. Procédé selon la revendication 4, dans lequel les paquets de données stockés dans la deuxième file d'attente FIFO sont transmis au transpondeur optique à débit binaire adaptatif avec une priorité plus haute que les paquets de données stockés dans la première file d'attente FIFO.

6. Procédé selon l'une quelconque des revendications 1 à 5, comprenant en outre les étapes suivantes :
- déterminer la demande de trafic de paquets de données à transmettre via le transpondeur optique à débit binaire adaptatif (2) ;
- déterminer si une transition de débit binaire doit être réalisée en fonction de la demande de trafic déterminée ; et
- envoyer une notification de transition de débit binaire à la couche cliente après détermination qu'une transition de débit binaire doit être réalisée.

7. Procédé selon l'une quelconque des revendications 1 à 6, dans lequel la couche cliente comprend un ensemble de ports côté optique (6) destinés à fournir une communication entre la couche cliente et la couche optique et une mémoire tampon (8) pour chacun des ports côté optique, le procédé comprenant en outre la gestion des mémoires tampon (8) afin que chaque mémoire tampon contienne un espace de mémoire tampon libre de taille supérieure ou égale à T*C bits lorsque l'intervalle de temps de transition du débit binaire adaptatif du transpondeur débute ; avec :
- T : la durée de l'intervalle de temps de transition ; et
- C : le débit binaire maximal du transpondeur à débit binaire adaptatif (2).

8. Procédé selon l'une quelconque des revendications 1 à 6, dans lequel la couche cliente comprend un ensemble de ports côté optique (6) destinés à fournir une communication entre la couche cliente et la couche optique et une mémoire tampon commune (19) partagée entre les ports côté optique (6) et dans lequel tous les paquets de données reçus au niveau de la couche cliente sont destinés à être transmis par le transpondeur optique à débit binaire adaptatif (2) durant l'intervalle de temps de transition sont stockés dans la mémoire tampon commune (19).

9. Carte de ligne côté client (1) destinée à un noeud de commutation optique comprenant une couche optique dotée d'un transpondeur optique à débit binaire adaptatif (2) qui convertit les paquets de données reçus en provenance de la couche cliente en signaux optiques et qui exécute un procédé de modulation, ledit transpondeur optique à débit binaire adaptatif (2) étant conçu pour adapter dynamiquement son débit binaire de transmission en réglant un ou plusieurs paramètres du procédé de modulation choisis parmi un format de modulation, un débit de symboles et un schéma de codage de canal pour la correction d'erreurs sans voie de retour, la carte de ligne côté client (1) étant configurée pour recevoir des paquets de données et pour acheminer lesdits paquets de données vers la couche optique, la carte de ligne côté client comprenant :
- au moins un port côté client (4) conçu pour fournir une communication bidirectionnelle de paquets de données entre un réseau (5) et la carte de ligne côté client (1) ;
- au moins un port côté optique (6) conçu pour fournir une communication bidirectionnelle de paquets de données entre la carte de ligne côté client (1) et le transpondeur optique à débit binaire adaptatif (2) ; et
- une mémoire tampon (8, 19) ;
- la carte de ligne côté client étant configurée pour :
- recevoir une notification de transition de débit binaire contenant des informations temporelles qui représentent un intervalle de temps de transition durant lequel une adaptation du débit binaire de transmission du transpondeur optique à débit binaire adaptatif (2) est planifiée ;
- stocker dans la mémoire tampon (8, 19) tous les paquets de données reçus au niveau de la carte de ligne côté client (1) et destinés à être transmis par le transpondeur optique à débit binaire adaptatif (2) durant l'intervalle de temps de transition en réponse à la réception de la notification de transition de débit binaire ; et
- transmettre au transpondeur optique à débit binaire adaptatif (2) les paquets de donnés stockés dans la mémoire tampon (8, 19) de la carte de ligne côté client (1) durant l'intervalle de temps de transition après que ledit intervalle de temps de transition s'est écoulé.

10. Carte de ligne côté client (1) selon la revendication 9, comprenant un ensemble de ports côté optique (6) et un ensemble de mémoires tampon (8), chacune associée à l'un des ports côté optique, et conçues pour stocker tous les paquets de données destinés à être transmis par le transpondeur optique à débit binaire adaptatif (2) durant l'intervalle de temps de transition.

11. Carte de ligne côté client (1) selon la revendication 9, comprenant un ensemble de ports côté optique (6) et une mémoire tampon commune (19) partagée entre les ports côté optique (6) et conçue pour stocker tous les paquets de données reçus au niveau de la couche cliente et destinés à être transmis par le transpondeur optique à débit binaire adaptatif (2) durant l'intervalle de temps de transition.

12. Noeud de commutation optique comprenant une carte de ligne côté client selon l'une quelconque des revendications 9 à 11, au moins un transpondeur optique à débit binaire adaptatif (2) et un module de plan de commande de transition de débit binaire (13) conçu pour déterminer si une transition de débit binaire doit être réalisée en fonction d'une demande de trafic déterminée et envoyer une notification de transition de débit binaire à la carte de ligne côté client (1) et au transpondeur optique à débit binaire adaptatif (2) après détermination qu'une transition de débit binaire doit être réalisée.
